# EUROPEAN PATENT APPLICATION

(11) **EP 0 699 702 A2**
(43) Date of publication of application: **06.03.1996**
(21) Application number: 95810540.5
(22) Date of filing: 30.08.1995
(51) Int. Cl.: C08G 64/08, C08G 63/692

(54) **Reaction products of carbonyl compounds and dihydric phenols**

(30) Priority: 02.09.1994 US 300681
(71) Applicant: THE DOW CHEMICAL COMPANY, Midland, Michigan 48640 (US)
(72) Inventor: Flores, David P., Lake Jackson, Texas 77566 (US); Ho, Thoi H., Lake Jackson, Texas 77566 (US); Osby, John O., Lake Jackson, Texas 77566 (US); Eiffler, Jürgen, D-21682 Stade (DE)
(74) Representative: Patentanwälte Schaad, Balass & Partner AG

(57) **Abstract**

A reaction product of at least
(1) a carbonyl dihalide, diester or anhydride,
(2) a dihydric phenol and
(3) a phosphine of the general Formula II

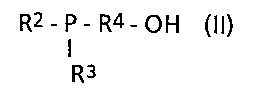

wherein
R represents an alkyl, cycloalkyl, aryl or aryl-alkyl group or an aryl group which is substituted at the aromatic ring with one or more radicals selected from the group consisting of halogen, alkyl and alkoxy,
R³ represents an alkyl, cycloalkyl, aryl or aryl-alkyl group or an aryl group which is substituted at the aromatic ring with one or more hydroxy, halogen, alkyl and/or alkoxy radicals and
R⁴ represents an alkylene, cycloalkylene, arylene or aryl-alkylene group or an arylene group which is substituted at the aromatic ring with one or more halogen, alkyl and/or alkoxy radicals.

The reaction product is useful for enhancing the thermal stability of a thermoplastic polymer.

## Description

The present invention relates to end-capped reaction products of carbonyl compounds and dihydric phenols and a process for preparing them. Specifically, the present invention relates to end-capped reaction products of (1) a carbonyl dihalide, diester or anhydride, and (2) a dihydric phenol.

It is generally known in the art that most of the known thermoplastic polymers, such as polycarbonates, are affected to a certain extent when they are exposed to heat. The deterioration of the polymers often results in yellowing of the polymer and in degradation of its molar mass.

A large variety of stabilizers has been suggested which can be blended with the thermoplastic polymers for enhancing their thermal stability.

It has been suggested to utilize certain organic phosphites, phosphonites or phosphines, optionally in combination with epoxides or polydialkylsiloxanes, for stabilizing polycarbonates against oxidative, thermal and actinic degradation.

For example, U.S. Patent No. 4,092,288 discloses color stable polycarbonate compositions consisting of an aromatic polycarbonate resin having in admixture therewith 0.005 to 0.5 weight percent of a triaryl, trialkyl, tri(alkylaryl) or alkyl-aryl phosphine, preferably triphenylphosphine.

U.S. Patent No. 4,627,949 discloses a process for preparing shaped articles from polycarbonates stabilized with phosphines by a devolatilizing injection-molding or extrusion process. The phosphines have the formula (R)₂PR¹ wherein R is an unsubstituted or substituted C₆-C₁₄-aryl radical and R¹ = R or an unsubstituted or substituted C₁-C₁₈-alkyl radical.

U.S. Patent No. 4,835,202 discloses the use of certain (hydroxyphenyl)phosphine derivatives for stabilizing a wide variety of polymers against oxidative, thermal and actinic degradation. These (hydroxyphenyl)phosphine derivatives are blended with the polymers in an amount of from 0.01 to 5 percent by weight.

Unfortunately, the suggested stabilizers are volatile at the high temperatures which are applied for extruding polycarbonates.

Alternatively, it has been suggested to modify the polymer chains for enhancing the thermal stability of thermoplastic polymers.

U.S. patent No. 4,444,978 discloses the preparation of carbonate polymers having increased thermal stability by incorporating into the polymer chain an oligomer which has the formula H-[O-R-O-P(OR₁)]ₙ-O-R-OH. R is the divalent residue of a dihydric mononuclear or a dihydric polynuclear phenol, R₁ is an alkyl, aralkyl or alkaryl group having 1 to 25 carbons, and n is a number having an average value of 1 to 200. From 10 to 2000 ppm, preferably from 100 to 1000 ppm of the oligomer are copolymerized with the copolymer.

U.S. Patent No. 4,474,937 discloses phosphorous-modified polyester carbonates resins. The repeating unit within the polymer can be a phosphonite, phosphite, phosphonate or phosphate species. The amount of phosphorous present in the polymer is 1 to 1000 ppm, preferably 1 to 100 ppm, based on the weight of the polymer. The resins exhibit improved thermal-oxidative stability compared to non-modified polyester carbonates.

U.S. Patent No. 4,145,525 discloses end-capped polyalkylene carbonates of improved thermal stability. At least a portion of the free hydroxyl groups is reacted with a hydroxyl-reactive phosphorous compound whereby the active hydrogen on the hydroxyl group is replaced by an oxygen-phosphorous bond. Unfortunately, the oxygen-phosphorous bond can be easily hydrolyzed by acids. Accordingly, the end-capped groups are relatively unstable in the presence of acids. Unfortunately, traces of acids are often present when polycarbonates are washed and later extruded.

It is still desirable to provide new methods of enhancing the thermal stability of thermoplastic polymers in order to meet the ever increasing quality requirements for thermoplastic polymers.

One object of the present invention is to provide a new method of enhancing the thermal stability of thermoplastic polymers. It is a preferred object of the present invention to enhance the thermal stability of thermoplastic polymers without the aid of phosphines or phosphanes which are volatile at elevated temperatures, such as those disclosed in U.S. Patent Nos. 4,092,288 and 4,627,949. It is another preferred object of the present invention to enhance the thermal stability of thermoplastic polymers without introducing groups into the polymer chains which can be easily hydrolyzed, such as the groups disclosed in U.S. Patent No. 4,145,525 comprising an oxygen-phosphorous bond.

One aspect of the present invention is the reaction product of at least
(1) a carbonyl dihalide, diester or anhydride,
(2) a dihydric phenol and
(3) a phosphine of the general Formula II 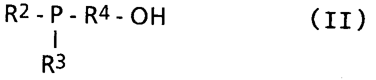 wherein
   R represents an alkyl, cycloalkyl, aryl or aryl-alkyl group or an aryl group which is substituted at the aromatic ring with one or more halogen, alkyl and/or alkoxy radicals,
   R³ represents an alkyl, cycloalkyl, aryl or aryl-alkyl group or an aryl group which is substituted at the aromatic ring with one or more hydroxy, halogen, alkyl and/or alkoxy radicals; and
   R⁴ represents an alkylene, cycloalkylene, arylene or aryl-alkylene group or an arylene group which is substituted at the aromatic ring with one or more halogen, alkyl and/or alkoxy radicals.

Another aspect of the present invention is a process for preparing a product which is end-capped with one or more groups 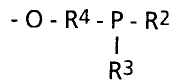
by reacting at least
(1) a carbonyl dihalide, diester or anhydride,
(2) a dihydric phenol; and
(3) a phosphine of the general Formula II

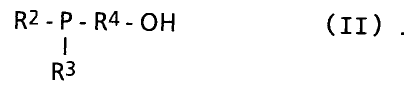

Yet another aspect of the present invention is the use of the reaction product of the present invention for enhancing the thermal stability of a thermoplastic polymer.

Yet another aspect of the present invention is a method of enhancing the thermal stability of a thermoplastic polymer, which method comprises contacting the thermoplastic polymer with an effective amount of the reaction product of the present invention.

Yet another aspect of the present invention is a polymer composition which comprises one or more thermoplastic polymers, such as a polycarbonate, and the reaction product of the present invention. The polymer composition may be in various forms, for example, in the form of granules or pellets or in the form of a molded article.

The present invention provides a reaction product of at least
(1) a carbonyl dihalide, diester or anhydride,
(2) a dihydric phenol,
(3) a phosphine of the general Formula II 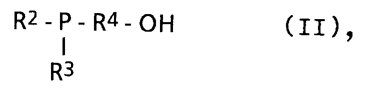
(4) optionally a monohydric phenol comprising no phosphorous atom and
(5) optionally a branching agent.

The molar ratio between the carbonyl dihalide, diester or anhydride (1) and the dihydric phenol (2) preferably is on the average at least 0.1:1, more preferably at least 0.5:1, most preferably at least 1:1. The molar ratio between the carbonyl dihalide, diester or anhydride (1) and the dihydric phenol (2) preferably is on the average of up to 2:1, more preferably up to 1.3:1 and most preferably up to 1.1:1.

The molar ratio between the dihydric phenol (2) and the phosphine of Formula II preferably is on the average of at least 1:1, more preferably at least 3:1, and most preferably at least 5:1. The molar ratio between the dihydric phenol (2) and the phosphine of Formula II preferably is on the average of up to 5000:1, more preferably up to 2000:1, most preferably up to 1000:1, and particularly up to 100:1.

The molar ratio between the dihydric phenol (2) and the monohydric phenol (4) comprising no phosphorous atom preferably is on the average of at least 1:1, more preferably at least 5:1 and most preferably at least 10:1. The molar ratio between the dihydricphenol (2) and the monohydric phenol (4) preferably is on the average of up to 1000:1, more preferably up to 100:1, and most preferably up to 50:1.

As indicated above, the monohydric phenol (4) comprising no phosphorous atom is only optional in the reaction product of the present invention. If it is present the molar ratio between the monohydric phenol (4) comprising no phosphorous atom and the phosphine of formula II preferably is on the average of from 0.01 to 100:1 and more preferably from 0.1 to 10:1.

If the reaction product of the present invention comprises a branching agent, it preferably comprises from 0.01 to 3 percent, more preferably from 0.05 to 2 percent of the branching agent, based on the weight of the reaction product.

Useful carbon dihalides, diesters and anhydrides are, for example, compounds of the formulas X-C(O)-arylene-C(O)-X (III) or X-C(O)-alkylene-C(O)-X (IV). Preferred carbon dihalides are carbon dichlorides.

In formulas III and IV, X is halogen, preferably chlorine or bromine, hydroxy or alkoxy, preferably alkoxy groups containing from 1 to 6 carbon atoms, such as methoxy, ethoxy, n-propoxy, i-propoxy, n-butoxy, sec-butoxy or tert-butoxy; or both X's together are an anhydride group.

The arylene group in Formula III is optionally substituted at the aromatic ring with one or more halogen, preferably chlorine, bromine or fluorine; hydroxy, oxyalkyl and/or alkoxy radicals, -C(O)-[O-R₄-P-(R)(R³)] or a monovalent hydrocarbon radical, such as alkyl, cycloalkyl or aryl. Preferred alkyl groups contain 1 to 6, more preferably 1 to 4 carbon atoms, such as methyl, ethyl, n-propyl, i-propyl, n-butyl, sec-butyl or tert-butyl or the pentyl or hexyl groups. Preferred cycloalkyl groups contain 5 or 6 carbon atoms, such as cyclopentyl or cyclohexyl. Preferred aryl groups contain 6 to 8 carbon atoms, such as phenyl, tolyl or xylyl. Preferred alkoxy groups contain 1 to 6 carbon atoms, more preferably 1 to 4 carbon atoms, such as the methoxy, ethoxy, n-propoxy, i-propoxy, n-butoxy, sec-butoxy or tert-butoxy groups.

The arylene group in Formula III preferably is a phenylene group which is optionally substituted at the aromatic ring with one or more radicals listed above, more preferably with one or more halogen, alkyl, cycloalkyl and/or alkoxy radicals. The two carbonyl groups in Formula III are preferably bound in para-position to the optionally substituted phenylene group.

The alkylene group in Formula IV is optionally substituted with one or more halogen, preferably chlorine, bromine or fluorine; hydroxy, oxyalkyl and/or alkoxy radicals, -C(O)-[O-R⁴-P-(R)(R³)] or a monovalent hydrocarbon radical, such as alkyl, cycloalkyl or aryl. Preferred alkoxy, alkyl, cycloalkyl or aryl groups are those described above with reference to Formula III.

The alkylene group in Formula IV is preferably unsubstituted or substituted with one or more alkyl and/or alkoxy groups. The most preferred alkyl groups are methyl, ethyl, n-propyl or, most preferably isopropyl. These alkyl groups provide branching to the alkylene group. The alkylene group preferably comprises from 1 to 50, more preferably from 3 to 30, most preferably from 4 to 25 carbon atoms. Most preferably it is linear and unsubstituted.

The most preferred carbon dichlorides are phosgene or terephthalic acid dichloride.

The dihydric phenols employed in the practice of the present invention are dihydric phenols in which the sole reactive groups are the two phenolic hydroxyl groups. Useful dihydric phenols are for example those of the general formula HO-Z-OH,
wherein Z comprises a mononuclear or polynuclear aromatic group of 6 to 30 carbon atoms, to which the oxygen atoms are directly linked. The aromatic group may comprise one or more heteroatoms and may be substituted with one or more groups, for example, one or more halogens, one or more monovalent hydrocarbon radicals, such as one or more alkyl, cycloalkyl or aryl groups; and/or one or more alkoxy and/or aryloxy groups.

Preferred meanings for Z are groups of Formula V 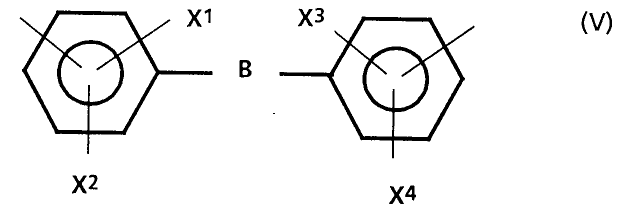
wherein
B is a single bond, a divalent hydrocarbon radical containing 1 to 15 carbon atoms, preferably 1 to 6 carbon atoms, most preferably -(CH₃)₂C-, -S-, -S-S-, -S(O)-, -S(O₂)-, -O- or -C(O)- and
X¹, X, X³ and X⁴ independently are hydrogen; halogen, preferably chlorine, bromine or fluorine; a monovalent hydrocarbon radical, such as alkyl, cycloalkyl or aryl; alkoxy or aryloxy.

Preferred alkyl groups contain 1 to 6, more preferably 1 to 4 carbon atoms, such as methyl, ethyl, n-propyl, i-propyl, n-butyl, sec-butyl or tert-butyl or the pentyl or hexyl groups. Preferred cycloalkyl groups contain 5 or 6 carbon atoms, such as cyclopentyl or cyclohexyl. Preferred aryl and aryloxy groups contain 6 to 8 carbon atoms, such as phenyl, phenyloxy, tolyl or xylyl. Preferred alkoxy groups contain 1 to 6 carbon atoms, more preferably 1 to 4 carbon atoms, such as the methoxy, ethoxy, n-propoxy, i-propoxy, n-butoxy, sec-butoxy or tert-butoxy groups.

Preferably, both phenolic hydroxy groups in the dihydric phenol HO-Z-OH are arranged in para-position to the radical B in the group of Formula V.

Preferred examples of dihydric phenols of the general formula HO-Z-OH are bis(hydroxyphenyl)fluorenes, such as 9,9-bis-(4-hydroxyphenyl)fluorene, dihydroxy benzenes and the halo- and alkyl-substituted dihydroxy benzenes, such as hydroquinone, resorcinol, 1,4-dihydroxy-2-chlorobenzene, 1,4-dihydroxy-2-bromobenzene, 1,4-dihydroxy-2,3-dichlorobenzene, 1,4-dihydroxy-2-methylbenzene, 1,4-dihydroxy-2,3-dimethylbenzene and 1,4-dihydroxy-2-bromo-3-propylbenzene; dihydroxybiphenylenes, such as 4,4'-dihydroxydiphenyl; 3,3'-dimethyl-4,4'-dihydroxydiphenyl, 3,3'-diethyl-4,4'-dihydroxydiphenyl, 3,3'-dichloro-4,4'-dihydroxydiphenyl or 3,3',5,5'-tetrabromo-4,4'-dihydroxydiphenyl; bis(hydroxyphenyl)-alkanes, such as 1,1-bis(4-hydroxyphenyl)-1,1-diphenylmethane, 1,1-bis(3-methyl-4-hydroxyphenyl)ethane, 2,2-bis(3-propyl-4-hydroxyphenyl)decane, 2,2-bis(3,5-dibromo-4-hydroxyphenyl)nonane, 2,2-bis(3,5-dibromo-4-hydroxyphenyl)pentane, 2,2-bis(3,5-dibromo-4-hydroxyphenyl)propane, 2,2-bis(3,5-difluoro-4-hydroxyphenyl)butane, 2,2-bis(3,5-isopropyl-4-hydroxyphenyl)nonane, 2,2-bis(3-ethyl-4-hydroxyphenyl)octane, 4,4-bis(4-hydroxyphenyl)heptane, 3,3-bis(3-methyl-4-hydroxyphenyl)hexane, 1-phenyl-2,2-bis(4-hydroxyphenyl)propane (phenyl-substituted bisphenol A) or, most preferably, 2,2-bis(4-hydroxyphenyl)propane (bisphenol A); bis(hydroxyphenyl)cycloalkanes, such as 1,1-bis-(4-hydroxyphenyl)cyclopentane, 1,1-bis-(4-hydroxyphenyl)cyclohexane, 1,1-bis-(4-hydroxyphenyl)cycloheptane, 1,1-bis-(4-hydroxyphenyl)cyclodecane or 1,1-bis-(4-hydroxyphenyl)-3,3,5-trimethylcyclohexane; bis(hydroxyphenyl)ethers, such as bis(3-chloro-5-methyl-4-hydroxyphenyl)ether, bis(3,5-dibromo-4-hydroxyphenyl)ether, bis(3,5-dichloro-4-hydroxyphenyl)ether, bis(3-ethyl-4-hydroxyphenyl)ether, bis(3-methyl-4-hydroxyphenyl)ether or bis(4-hydroxyphenyl)ether; bis(hydroxyphenyl)sulfides, bis(hydroxyphenyl)ketones, bis(hydroxyphenyl)sulfones, such as bis(3,5-diisopropyl-4-hydroxyphenyl)sulfone, bis(3,5-dibromo-4-hydroxyphenyl)sulfone, bis(3-methyl-5-ethyl-4-hydroxyphenyl)sulfone or bis(3-chloro-4-hydroxyphenyl)sulfone, bis(3-methyl-4-hydroxyphenyl)sulfone or bis(4-hydroxyphenyl)sulfone; bis(hydroxyphenyl)sulfoxides, such as bis(3,5-diisopropyl-4-hydroxyphenyl)sulfoxide, bis(3,5-dibromo-4-hydroxyphenyl)sulfoxide, bis(3,5-dimethyl-4-hydroxyphenyl)sulfoxide, bis(3-methyl-5-ethyl-4-hydroxyphenyl)sulfoxide bis(3-methyl-4-hydroxyphenyl)sulfoxide or bis(4-hydroxyphenyl)sulfoxide; and alpha,alpha'-bis(hydroxyphenyl)-diisopropylbenzenes.

Other examples of suitable dihydric phenols are listed in U.S. Patent No. 4,627,949, column 2, line 68 column 3, lines 1-22, in U.S. Patent No. 4,962,144, column 2, lines 17-46 and in European Patent Application EP-A-0 423 562, p. 2, lines 24-55 and p. 3, lines 1-19. Mixtures of two or more dihydric phenols may also be used, for example, a mixture comprising 3 to 97 percent of bisphenol A and 97 to 3 weight percent of another dihydric phenol, such as 9,9-bis-(4-hydroxyphenyl)fluorenone.

The most preferred dihydric phenol is bisphenol A.

In the phosphine of Formula II
R represents an alkyl, cycloalkyl, aryl or aryl-alkyl group or an aryl group which is substituted at the aromatic ring with one or more halogen, alkyl and/or alkoxy radicals,
R³ represents an alkyl, cycloalkyl, aryl or aryl-alkyl group or an aryl group which is substituted at the aromatic ring with one or more hydroxy, halogen, alkyl and/or alkoxy radicals; and
R⁴ represents an alkylene, cycloalkylene, arylene or aryl-alkylene group or an arylene group which is substituted at the aromatic ring with one or more halogens, one or more alkyl groups and/or one or more alkoxy groups.

The radicals R and R³ can be identical or different.

Of the alkyl and alkylene groups those are preferred that have 1 to 18, preferably 1 to 12 carbon atoms. The alkyl and alkylene groups can be straight- or branched-chain. The most preferred alkyl groups are methyl, ethyl, n-propyl, i-propyl, n-butyl, sec-butyl or tert-butyl or the pentyl, hexyl, octyl, nonyl, decyl or octadecyl groups. The most preferred alkylene groups are methylene, ethylene, n-propylene, i-propylene, n-butylene, sec-butylene or tert-butylene or the pentylene, hexylene, octylene, nonylene, decylene or octadecylene groups.

Of the cycloalkyl and cycloalkylene groups those having 5 or 6 carbon atoms are preferred, such as cyclopentyl or cyclohexyl, cyclopentylene or cyclohexylene.

Of the aryl and arylene groups those having from 6 to 14 carbon atoms are preferred, such as phenyl or naphthyl, phenylene or naphthylene. The aryl and/or arylene groups may be substituted with one or more of the above-mentioned alkyl groups and/or with one or more halogen, such as fluoro, chloro or bromo, and/or one or more alkoxy groups. Alkoxy groups, if present, preferably contain 1 to 6 carbon atoms, such as the methoxy, ethoxy, n-propoxy, i-propoxy, n-butoxy, sec-butoxy or tert-butoxy groups. If substituted, the aryl and/or arylene groups preferably are substituted with 1, 2 or 3 substituent groups.

In the aryl-alkyl groups the above-mentioned alkyl groups are preferred and the aryl group preferably is phenyl. Preferred aryl-alkyl groups are benzyl, phenyl butyl, tolyl or xylyl.

In the aryl-alkylene groups the above-mentioned alkylene groups are preferred and the aryl group preferably is phenyl. Preferred aryl-alkylene groups are benzylene, phenyl butylene, tolylene or xylylene.

If R⁴ is cyclohexyl, phosphorous and oxygen are preferably bound in the 1,4-position to the cyclohexyl group. If R⁴ is an optionally substituted phenylene group, phosphorous and oxygen are preferably arranged in the para-position to the phenylene group.

Preferably, R and R³ are aryl groups, most preferably phenyl, and R⁴ is an arylene group, most preferably phenylene. The aryl and/or arylene groups preferably have from 6 to 14 carbon atoms. They are preferably unsubstituted-or substituted at the aromatic ring with one or more halogens, such as bromo or chloro, one or more alkyl groups, such as the above-mentioned C₁₋₆-alkyl groups, and/or one or more alkoxy groups, such as methoxy, ethoxy, propoxy and/or butoxy groups. Alternatively, R³ can be an aryl group which is substituted at the aromatic ring with a hydroxy group. However, halogens, alkyl groups and alkoxy groups are more useful than hydroxy as substituents for the aryl group. The most preferred phosphine of Formula II is hydroxyphenyl diphenyl phosphine, particularly 4-hydroxyphenyl diphenyl phosphine.

Compounds of Formula II and methods of preparing them are known in the art, for example, from U.S. Patent No. 4,835,202 and from the references cited therein.

A monohydric phenol comprising no phosphorous atom may also be incorporated into the reaction product of the present invention. The monohydric phenol may be used as a chain stopper or for controlling the molecular weight of the product. Suitable monohydric phenols are, for example, phenol, lower alkyl phenols, such as 4-methylphenol, 3-ethylphenol, 5-propylphenol, 4-isopropylphenol, 5-butylphenol, 3-isobutylphenol, 4-tert-butylphenol or 4-pentylphenol; aryl phenols, such as 4-phenyl phenol or 5-phenyl phenol; cycloaliphatic phenols, such as 4-cyclohexyl phenol or 3-cyclohexyl phenol; or monophenol alkanes, such as 2,2-(4-hydroxyphenyl-4-methoxyphenyl) propane or 3-hydroxyphenyl ethane. The most preferred monohydric phenol is tert-butylphenol, most preferably 4-tert-butylphenol. Other preferred chain stoppers and their useful amounts are disclosed in European Patent Application EP-A-0 423 562, p. 4, lines 5-21.

A branching agent may also be incorporated into the reaction product of the present invention. Suitable branching agents are for example described in U.S. Patent Nos. 3,544,514 and 4,680,370 and the published European Patent application EP-A-0 423 562, p. 3, line 43 to p. 4, line 2. Useful branching agents have three or more functional groups, preferably those comprising three or more phenolic hydroxyl groups. Preferred branching agents are 1,3,5-tris(4-hydroxyphenyl)benzene, 1,1,1-tris(4-hydroxyphenyl)ethane, tris(4-hydroxyphenyl)-phenylmethane or 2-(4-hydroxyphenyl)-2-(2,4-dihydroxyphenyl)propane. Other preferred branching agents are tri(p-hydroxyphenyl)phosphines, tri-(p-hydroxyphenyl)phosphine oxides, tri-(p-hydroxyphenyl)phosphites, tri-(p-hydroxyphenyl)phosphates, as described in U.S. Patent No. 4,680,370, 2,4-dihydroxy-benzoic acid, cyanuric chloride, 3,3-bis-(4-hydroxy-3-methyl-phenyl)2-oxo-2,3-dihydroindol, trimellic and trimesic acid or acid chlorides.

Preferred reaction products of the present invention have the general Formula I 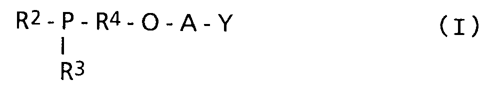
wherein
Y is hydroxy, 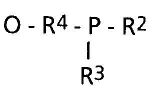
or the residue of a monohydric phenol comprising no phosphorous atom,
R, R³ and R⁴ have the meanings indicated above; and
A is -C(O)-[-O-Z-O-C(O)]ₘ-,
-C(O)-arylene-C(O)-[-O-Z-O-C(O)-arylene-C(O)]ₘ- or
-C(O)-alkylene-C(O)-[-O-Z-O-C(O)-alkylene-C(O)]ₘ-,
wherein
Z comprises a mononuclear or polynuclear aromatic group of 6 to 30 carbon atoms, to which the oxygen atoms are directly linked, the arylene group in each occurrence independently is optionally substituted at the aromatic ring with one or more halogen, hydroxy, oxyalkyl and/or alkoxy radicals, C(O)-[O-R⁴-P-(R)(R³)] or a monovalent hydrocarbon radical, and the alkylene group in each occurrence independently is optionally substituted with one or more halogen, hydroxy, oxyalkyl and/or alkoxy radicals, C(O)-[O-R⁴-P-(R)(R³)] or a monovalent hydrocarbon radical and m is on the average at least 0.5.

Preferred groups Z and optionally substituted arylene and alkylene groups are those defined above with reference to Formulas V, III and IV.

Preferably m is on the average of from 1 to 75, more preferably from 2 to 60, most preferably from 5 to 30.

The reaction product of the present invention preferably has a number average molecular weight of from 500 to 100,000, more preferably from 1000 to 50,000 and most preferably from 5,000 to 35,000.

Depending on its molecular weight, the product of the present invention can be used as a thermoplastic polymer as such, optionally blended with one or more other polymers described further below, or it can be used as a low molecular weight additive to thermoplastic polymers. The product of the present invention exhibits enhanced thermal stability, compared to a corresponding product which is not end-capped or terminated with a group [O-R⁴-P-(R)(R³)].

It has been found that the reaction products of the present invention are considerably less volatile at elevated temperatures than phosphines and phosphanes disclosed in U.S. Patent Nos. 4,092,288 and 4,627,949. Particularly, the reaction products of the present invention are less volatile at temperatures which are usually maintained during processing of polycarbonates, that is, at temperatures of more than about 200°C. Due to their lower volatility, less powerful equipment, such as ventilation, is required to keep the concentration of these compounds in air below a certain level.

The product of the present invention, which is terminated or end-capped with 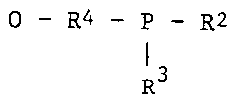
groups, is produced by reacting at least
(1) a carbonyl dichloride, diester or anhydride,
(2) a dihydric phenol,
(3) a phosphine of the general Formula (II) 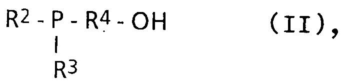
(4) optionally a monohydric phenol comprising no phosphorous atom and
(5) optionally a branching agent.

The reactants (1)-(5) and their preferred molar and weight ratios are described above.

Depending on the specific starting materials which are used in the reaction, an acid may be produced as a by-product. For example, HCl is produced when X in Formulas III and IV is chlorine. In such a case, preferably a base is added to the reaction mixture for neutralizing the acid. Preferably, the molar number of basic groups is at least 1, more preferably from 1.5 to 2 per mole of chlorine radical in the compound of Formula III or IV. The preferred types of base mainly depend on the type of diluent that is used for the reaction.

The reaction temperature preferably is from 20°C to 100°C, more preferably from 20°C to 70°C, most preferably from 25°C to 50°C, depending on the reaction diluent. The reaction is preferably conducted at about ambient pressure.

Depending on the type of reaction diluent, the reaction can be conducted a) as a two-phase process or b) in a homogeneous solution.

For conducting a two-phase reaction, the reaction diluent comprises an aqueous and an organic phase. The volume ratio between the aqueous phase and the organic phase prefera-bly is from 1:2 to 2:1, more preferably from 1:1.5 to 1.5:1, most preferably 1:1. The interphase preferably is from 0.1 m/l to 50 m/l. The reaction diluents are preferably water and one or more water-immiscible solvents, preferably one or more chlorinated solvents. Preferred chlorinated solvents are chlorobenzene, dichlorobenzene, ethylene chloride or, most preferably, methylene chloride. The most useful bases are alkali hydroxides or alkaline earth hydroxides, such as NaOH, KOH, CsOH, Ca(OH)₂, Mg(OH)₂ or the corresponding oxides which form hydroxides in contact with water, such as CaO. The two-phase process is particularly suitable if phosgene is used in the reaction.

The use of a catalyst may be advantageous, particularly if phosgene is used in the reaction. Such catalysts are, for example, tertiary or quaternary organic bases, such as trimethylamine, triethylamine, dimethylaniline, diethylaniline, dimethylcyclohexylamine or pyridine; or the corresponding hydrohalides, such as triethyloctadecyl ammonium chloride, trimethylbenzylammonium fluoride, triethylbenzylammonium chloride, dimethyldodecyl ammonium chloride, dimethylbenzyl phenyl ammonium chloride, trimethylcyclohexyl ammonium bromide or N-methylpyridonium chloride; or tetramethylammonium hydroxide.

For conducting the reaction in a homogeneous solution, generally one or more organic solvents are used which are inert towards the reactants and which are preferably polar. Preferred organic solvents are chlorinated solvents, such as chlorobenzene, dichlorobenzene, ethylene chloride or, most preferably, methylene chloride; ethers, such as dimethyl ether, tetrahydrofuran, dimethoxyethane or, most preferably, dioxane; formamides, such as dimethylformamide or dimethylacetamide; esters, such as acetic ester; or ketones, such as acetone. Most preferably, chlorinated solvents and/or ethers are used. Preferred bases are amines, more preferably tertiary aliphatic amines, such as trimethylamine or triethylamine, or aromatic amines, such as pyridine.

As indicated above, the product of the present invention can be used as a thermoplastic polymer of enhanced thermal stability as such, optionally blended with one ore more other thermoplastic polymers described below. This usage is preferred if the reaction product has a number average molecular weight of from 5,000 to 100,000, more preferably from 7,000 to 50,000 and most preferably from 10,000 to 35,000. A polymer composition of the present invention, which comprises a blend of the reaction product of the present invention and one or more other thermoplastic polymers, preferably comprises from 1 to 99 percent, more preferably from 10 to 90 percent of the reaction product of the present invention and from 99 to 1 percent, more preferably from 90 to 10 percent of one or more other thermoplastic polymers, based on the total weight of all thermoplastic polymers.

Other thermoplastic polymers which can be blended with the reaction product of the present invention preferably are polyolefins, such as ethylenehomo- or copolymers or polypropylenes, polyacrylates or polymethacrylates or poly(methyl methacrylates) or styrene-homo- or copolymers, such as polystyrene, styrene/acrylate copolymers, copolymers of styrene, butadiene and an acrylonitrile (ABS), polycarbonates or blend of such polymers.

Preferred thermoplastic polymers are known polycarbonates, that is, polycarbonates which are not end-capped with 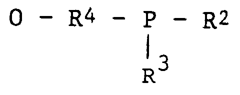
groups.

Preferred polymers are those which are prepared by reacting (1) a carbonyl dihalide, diester or anhydride, (2) a dihydric phenol, (4) optionally a monohydric phenol comprising no phosphorous atom and (5) optionally a branching agent. These compounds are all described above.

Polycarbonates are described in U.S. Patent 4,722,955, column 2, lines 6 to 42 and the references cited therein. Aromatic polycarbonates are preferred, particularly those prepared from bisphenol A and phosgene. The polycarbonates preferably have a number average molecular weight of from 10,000 to 250,000, more preferably from 12,000 to 120,000 and most preferably from 15,000 to 45,000. Methods of producing such polycarbonates are well known in the art. For example the polycarbonate can be prepared by a homogeneous organic solution process, a melt process or, preferably, a known interfacial two-phase process or by transesterification, as described by D. Freitag et al., Encyclopedia of Polymer Science and Engineering, Vol. 11, pp. 651-654 and the references cited therein. One or more types of polycarbonates may be blended with an ABS (acrylonitrile/butadiene/styrene) polymer, a polyester, such as polyalkyleneterephthalate, preferably polyethyleneterephthalate, a polystyrene, a polyarylenesulphone or with a polyolefin, such as polyethylene or an ethylene copolymer like an ethylene/propylene copolymer, ethylene/acrylate copolymer, polypropylene, polybutene, polyisobutene or polymethylpentene.

Alternatively, the reaction product of the present invention can be used as a low-molecular weight additive for enhancing the thermal stability of thermoplastic polymers. This usage is preferred if the reaction product has a number average molecular weight of from 500 to 10,000, more preferably from 1,000 to 7,000 and most preferably from 2,000 to 5,000. In this case the polymer composition of the present invention, which comprises a blend of the reaction product of the present invention and one or more thermoplastic polymers, preferably comprises from 0.01 to 50 percent, more preferably from 0.01 to 20 percent, most preferably from 0.5 to 10 percent of the reaction reaction product of the present invention, based on the weight of the thermoplastic polymer(s). If the polymer composition of the present invention comprises more than one types of reaction products of the present invention, their total weight preferably is within the indicated range. Useful thermoplastic polymers are, for example those listed above.

The polymer composition of the present invention may contain an inorganic or organic light diffuser. Light diffusers are generally used for introducing light-scattering properties into transparent polymers. If present, the polymer composition generally contains a light diffuser in an amount of from 0.1 to 10 weight percent, preferably from 0.2 to 5 weight percent, more preferably from 0.5 to 3 weight percent, based on the total weight of the thermoplastic polymer(s).

Preferred inorganic light diffusers are barium sulphate, titanium dioxide and blends thereof.

Organic light diffusers and methods of preparing them are known, for example from German Offenlegungsschrift 21 46 607. Preferred organic light diffusers are known from the published European Patent Application EP-A-0,269,324. This light diffuser comprises particles of a core/shell morphology which have an average diameter of from 2 to 15 micron, a particle size distribution such that at least 90 percent by weight of the particles fall within ±20 percent of the average particle diameter, a core of rubbery alkyl acrylate polymer, the alkyl group having from 2 to 8 carbon atoms, copolymerized with 0 or up to 5 percent cross-linker and 0 or up to 5 percent graft-linker (based on the total weight of the core), and one or more polymer shells. The shells comprise from 5 to 40 percent of the weight of the particles. All the shells or only the outer most shell are preferably a polymer of an alkyl methacrylate, a vinyl arene, a vinyl carboxylate and/or an alkyl acrylate. Further details on the light diffuser comprising particles of a core/shell morphology and methods of preparation are disclosed in European Patent application 0,269,324.

The polymer composition of the present invention may contain optional additives, such as optical brighteners or fluorescenting dyestuffs, pigments or colorants, tackifiers, mold release agents, impact modifiers or fillers. Such optional additives are generally known in the art. If present, the polymer composition of the present invention contains an optical brightener or a fluorescenting dye preferably in an amount of from 0.01 to 3 weight percent. The amount of pigments or colorants preferably is from 0.0001 to 5 weight percent, if present at all. Preferred mold release agents are known esters of long fatty acids; their preferred amount is from 0.01 to 2 weight percent. Preferred fillers are glass fibers, their preferred amount is from 1 to 20 weight percent. All percentages are based on the weight of the thermoplastic polymer in the polymer composition.

The polymer composition of the present invention may contain one or more other heat stabilizers, antioxidants and/or UV stabilizers, such as phosphites, hypophosphites, phosphonites or, preferably, one or more hindered phenols. Hindered phenols and their use as antioxidants are described in Ullmann's Encyclopedia of Industrial Chemistry, Volume 3, "Antioxidants", pp. 95-98, 5th ed., 1985, VCH Verlagsgesellschaft mbH and in Encyclopedia of Polymer Science and Engineering, Volume 2, "Antioxidants" pp. 75-91, 1985 by John Wiley & Sons, Inc. If present, the amount of such an additive generally is from 0.01 to 5 percent, preferably from 0.05 to 2 percent, more preferably from 0.1 to 1 percent, based on the weight of the thermoplastic polymer in the polymer composition. An additional heat stabilizer may be present, depending on the type of thermoplastic polymer comprised in the polymer composition of the present invention. For example, if the polymer composition is substantially comprised of a polycarbonate, the presence of an additional heat stabilizer may be advantageous. If a polycarbonate is blended with a substantial amount of another thermoplastic polymer like polyolefins, vinyl-containing polymers, such as polymethyl methacrylates, the presence of an additional heat stabilizer is generally not necessary.

For preparing the polymer composition of the present invention, an effective amount of the reaction product of the present invention is mixed with one or more thermoplastic polymers. One or more optional additives, such as an above-described light diffuser may be mixed with the thermoplastic polymer prior to, simultaneously with or after the addition of the reaction product of the present invention. The mixing temperature is not very critical. Room temperature is the most convenient one, however, decreased or elevated temperatures are also useful. However, it is advisable to mix the reaction product of the present invention with the thermoplastic polymer, which may contain optional additives such as a light-diffuser, before the thermoplastic polymer is processed to granules or pellets. Most preferably, the reaction product of the present invention is admixed before the thermoplastic polymer is subjected to any processing or compounding step at elevated temperature. The manner of dispersing or mixing the reaction product of the present invention and any optional additives with the thermoplastic polymer(s) is not critical. However, the process chosen should be one which results in a great degree of dispersion of all the additives throughout the thermoplastic polymer. Preferred mixing equipment are mixing rolls, ribbon blenders, dough mixers, and Banbury mixers. The mixture can then be processed to granules or pellets by known extrusion techniques. The mixture may be fed into an extruder and extruded to a strand which is then granulated into pellets or granules. A preferred method is a devolatilizing extrusion process as generally described in U.S. Patent No. 4,627,949. The extrusion is preferably conducted at a temperature of from 200°C to 390°C, more preferably from 230°C to 380°C, most preferably from 260°C to 370°C.

The pellets or granules may be formed into shaped articles in a generally known manner, for example, by compression molding, injection-molding or casting techniques. A preferred processing method is a devolatilizing injection-molding as generally described in U.S. Patent No. 4,627,949. The injection-molding is preferably conducted at a temperature of from 200°C to 380°C, more preferably from 230°C to 370°C, most preferably from 260°C to 370°C. Examples of shaped articles are sheets and lamp covers.

The invention is further illustrated by the following examples which should not be construed to limit the scope of the present invention. Unless stated otherwise all parts and percentages are given by weight.

### Examples 1 to 4 and Comparative Examples A to C

Several physical properties are measured as follows:

The Melt Flow Rate (MFR) is measured according to ASTM D 1238-88.

The Yellowness Index number (YI) is measured according to ASTM D 1925-70. The Yellowness Index number is an indication of discoloration of the polycarbonate composition. The lower the number, the lower is the yellowness of the polycarbonate composition due to discoloration.

The total light transmittance and light diffusion are measured according to ASTM D-1003.

### Example 1

### Preparation of the Reaction Product

(Ph)₂-P-Ph-O-CO-Ph-CO-[Bis A-CO-Ph-C(O)]ₘ- Y is produced, wherein Ph is phenyl(ene); bis A is the residue of bisphenol A and Y is -OH or -O-Ph-P-(Ph)₂.

A flask is fitted with a reflux condenser, a dropping funnel, an agitator, and an inlet pipe for nitrogen and for liquid addition. The system is flushed with nitrogen. 2.24 g of diphenyl 4-hydroxyphenyl phosphine and 9.12 g of bisphenol A are brought into the flask and flushed with nitrogen again. Then 100 mL of dichloromethane and 13.7 mL of triethylamine are added and stirred. A solution of 10 g of terephthaloyl chloride in 40 mL of dichloromethane is slowly added under agitation, followed by the addition of 100 mL of dichloromethane. The solution is stirred for 15 minutes and 20 mL of 1N NaOH are added. After further stirring, the reaction mixture is acidified with 1N HCl, diluted with 500 mL of dichloromethane and centrifuged. The lower dichloromethane phase is separated, washed with water until neutral and dichloromethane is removed by vacuum. A white product is obtained.

The weight loss of the compound at elevated temperatures is measured by TGA (Thermal Gravimetric Analysis) at 10°C/minute under nitrogen. The weight loss is as follows:

| Temperature (°C) | Weight loss (%) |
|---|---|
| 360 | > 2 |
| 420 | 5 |
| 502 | 46 |

For comparison, triphenylphosphine volatilizes completely at TGA test conditions at 300°C.

The reaction product will be referred to as Stabilizer I.

### Use of the Reaction Product as a Stabilizer I

Polycarbonate pellets prepared by interfacial polycondensation of bisphenol A and phosgene were used as a base resin. The polycarbonate had a melt flow rate of 3.3 and a Yellowness Index of 1.4. 1000 ppm of the Stabilizer I were dispersed in 1000 ppm of Cetiol™ at 70°C. The dispersion was homogeneously distributed on the polycarbonate pellets. Then 2.25 percent of barium sulphate (commercially available as K3 from Sachtleben), 150 ppm of titanium dioxide, 4000 ppm of Tinuvin™ 234 as a UV stabilizer and 1300 ppm of Uvitex™ as an optical brightener are added. All amounts of the additives were based on the weight of the polycarbonate. The mixture was extruded to granules at a temperature of 365°C. The extrusion was carried out under vented conditions (300 rpm, 55 to 65 percent torque, double screw). The granules were injection molded at 300°C into test bars of 3.2 mm thickness.

The total light transmittance was 60 percent, the light diffusion was 50 percent and the Yellowness Index was 16.5.

### Example 2

Test bars were prepared in the same manner as in Example 1, however 3000 ppm of the Stabilizer I of Example 1 were used.

The total light transmittance was 62 percent, the light diffusion was 51 percent and the Yellowness Index is 13.1.

### Comparative Example A

Test bars were prepared in the same manner as in Example 1, however no heat stabilizer was used.

The total light transmittance is 60 percent, the light diffusion was 50 percent and the Yellowness Index was 19.4.

### Example 3

### Preparation of the Reaction Product

(Ph)₂-P-Ph-O-CO-[Bis A-CO]ₘ-O-Ph-P-(Ph)₂ is produced, wherein Ph is phenyl(ene); bis A is the residue of bisphenol A and Y is -OH or -O-Ph-P-(Ph)₂.

2.8 g of diphenyl 4-hydroxyphenyl phosphine and 11.5 g of bisphenol A are brought into a flask of the type used in Example 1. Then 62 mL of a 10 percent solution of bis(trichloromethyl)carbonate, which forms phosgene by rearrangement, in dichloromethane is slowly added under agitation, followed by addition of 20 mL of 10 percent NaOH. A second portion of 62 mL of a 10 percent solution of bis(trichloromethyl)carbonate in dichloromethane is slowly added. Then 10 mL of 10 percent NaOH and a solution of 0.3 g of triethyl amine in 20 mL of dichloromethane are added. The solution is stirred for 15 minutes and another 10 mL of 10 percent NaOH and 0.5 mL of the solution of triethyl amine in dichloromethane are added. After 60 mL another 10 mL of 10 percent NaOH and 1 mL of the solution of triethylamine in dichloromethane are added. The reaction is conducted at a temperature of 25°C. After completion of the reaction, the two phases of the reaction mixture are separated by gravimetric settling. A slight nitrogen purge is maintained during the purification procedure. The aqueous phase is removed from the flask. Then 100 mL of 10 percent aqueous hydrochloric acid is added into the flask and the mixture is shaken. After gravimetric settling and removal of the aqueous phase, the remaining phase is washed three times with 100 mL of water. Then dichloromethane and subsequently remaining traces of water are removed under vacuum.

A white powder was obtained. The yield is 82 percent, based on the amount of Bisphenol A and diphenyl 4-hydroxyphenyl phosphine. The glass transition temperature is 108°C, as measured by Differential Scanning Calorimetry. The analysis by high pressure liquid chromatography (HPLC) shows the following:
- linear oligomers (m = 1 - 12): : 38 weight percent,
- higher linear oligomers: : 19 weight percent,
- polymer: : 12 weight percent.

On the average m is 17. The analysis by HPLC is confirmed by IR, ¹H-NMR and ³¹P-NMR.

IR-Spectroscopy: 1772 cmE⁻¹ (C=O); 1594 cmE⁻¹ (C-C aromatic); 629 cmE⁻¹ (p-substituted aromate); 750 cmE⁻¹ (mono-substituted aromate); 693 cmE⁻¹ (mono-substituted aromate)
¹-H-NMR (in CDCl₃): 1.65 ppm (isopropylidene groups of the bisphenolate-units); 7.0 to 7.4 (2 broader doubletts, phenylene-groups of the bisphenolate-units); 7.3 to 7.7 (phenylene of the phosphine groups)
¹³-C-NMR (in CDCl₃): 148, 151 ppm (C=O of the ester-bond)
The weight loss of the product is measured by the same method as in Example 1.

| Temperature (°C) | Weight loss (%) |
|---|---|
| 400 | 5 |
| 390 | 53 |
| 524 | 74 |
| 562 | 85 |
| 800 | 92 |

For comparison, triphenyl phosphine volatilizes completely at TGA test conditions at 300°C.

The reaction product will be referred to as Stabilizer II.

### Use of the Reaction Product as a Stabilizer II

Test bars were prepared in the same manner as in Example 1, except that the used polycarbonate had a melt flow rate of 3.3 and a Yellowness Index of 1.4, 500 ppm of the Stabilizer II was used (instead of 1000 ppm of Stabilizer I) and 1 percent of an organic light diffuser was used instead of a combination barium sulphate and titanium dioxide. The organic light diffuser was a polymer having a core of poly(butyl acrylate) and a shell of poly(methyl methacrylate). It is commercially available from Rohm and Haas under the trademark Paraloid EXL 5137.

The total light transmittance was 63 percent, the light diffusion was 53 percent and the Yellowness Index was 6.9.

### Comparative Example B

Test bars prepared in the same manner as described in Example 3, but without using a stabilizer, showed a total light transmittance of 63 percent, a light diffusion of 53 percent and a Yellowness Index of 7.8.

### Example 4

80 parts of bisphenol A, 1.93 parts of p-tert-butyl phenol, 0.08 parts of 4-hydroxyphenyl diphenyl phosphine, 590.6 parts of water and 70.1 parts of 50 percent NaOH were placed into a flask while stirring. 664 parts of a 7.05 percent solution of phosgene in methylene chloride were added to the stirred solution. The mixture was capped and shaken for 1 minute. 37.0 parts of 50 percent NaOH were added to the resulting mixture. This mixture was capped and shaken again. Additional 205.2 parts of methylene chloride and 8.2 parts of a 1 percent solution of triethylamine catalyst in water were added. The mixture was shaken to form the final polymer mixture.

0.5 g of the prepared polymer was placed into a glass ampoule of 1 cm diameter and 20 cm length. The ampoule was sealed in air using a Bunsen burner. The sample was placed in an oven at 340°C for 40 minutes. The sample was removed from the ampoule, dissolved in methylene chloride, filtered and dried. The molecular weight of the sample prior to and after the heating operation was determined by liquid chromatography (LC).

A solution of 0.427 percent of the heated polymer sample in methylene chloride was prepared and its absorbance at 420 nm was measured. It was 0.2347. The absorbance divided by the concentration of the polymer was calculated and listed in Table I. The lower this number is, the more stable is the polymer against discoloration by heat.

### Comparative Example C

A polymer was produced in the same manner were in Example 4, except that no 4-hydroxyphenyl diphenyl phosphine was used and 2.05 parts of p-tert-butyl phenol were used (instead of 1.93 parts). The polymer was heated and its molecular weight was determined as in Example 4.

A solution of 0.436 percent of the heated polymer sample in methylene chloride was prepared and its absorbance at 420 nm was measured. It is 0.7589. The absorbance divided by the concentration of the polymer was calculated and listed in Table I.

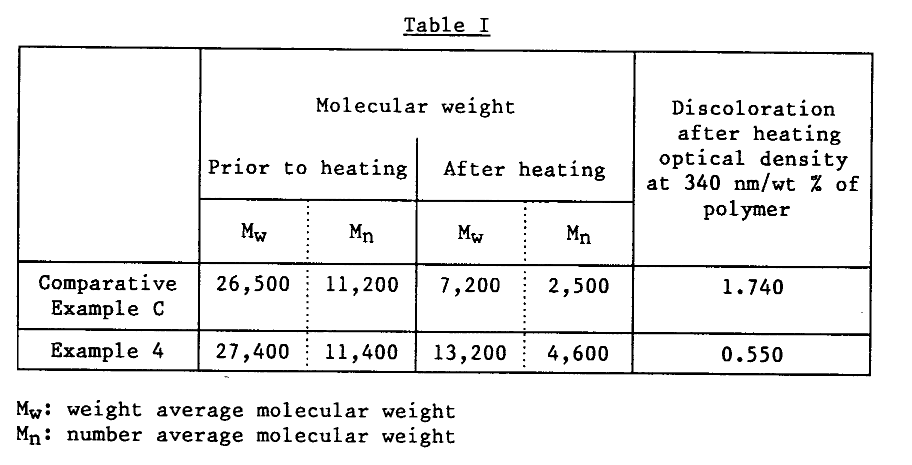

Table I illustrates that the thermal stability of a thermoplastic polymer, such as a polycarbonate, can be substantially improved by end-capping the polymer with only 1000 ppm of 4-hydroxyphenyl diphenyl phosphine.

## Claims

1. A reaction product of at least
(1) a carbonyl dihalide, diester or anhydride,
(2) a dihydric phenol and
(3) a phosphine of the general Formula II 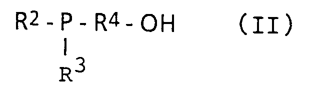 wherein
R represents an alkyl, cycloalkyl, aryl or aryl-alkyl group or an aryl group which is substituted at the aromatic ring with one or more halogen, alkyl and/or alkoxy radicals,
R³ represents an alkyl, cycloalkyl, aryl or aryl-alkyl group or an aryl group which is substituted at the aromatic ring with one or more hydroxy, halogen, alkyl and/or alkoxy radicals; and
R⁴ represents an alkylene, cycloalkylene, arylene or aryl-alkylene group or an arylene group which is substituted at the aromatic ring with one or more halogen, alkyl and/or alkoxy radicals.

2. The product of Claim 1 wherein the molar ratio between the dihydric phenol and the phosphine of Formula II on the average is from 3:1 to 5000:1.

3. The product of Claim 1 or Claim 2 which is the reaction product of at least
(1) a carbonyl dihalide, diester or anhydride,
(2) a dihydric phenol,
(3) a phosphine of the general Formula II and
(4) a monohydric phenol comprising no phosphorous atom.

4. The product of Claim 3 wherein the monohydric phenol comprising no phosphorous atom is t-butyl phenol.

5. The product of any one of Claims 1 to 4 wherein the carbonyl dihalide is phosgene, terephthalic acid dichloride or a benzene-tricarbonyl chloride.

6. The product of any one of Claims 1 to 5 wherein the phosphine of Formula II is (hydroxyphenyl)diphenyl phosphine.

7. The product of Claim 1 having the general Formula I 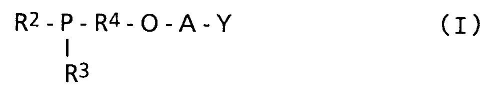 wherein
Y is hydroxy, 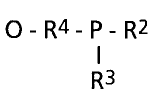 or the residue of a monohydric phenol comprising no phosphorous atom,
R, R³ and R⁴ have the meanings as indicated in Claim 1 and
A is -C(O)-[-O-Z-O-C(O)]ₘ-,
-C(O)-arylene-C(O)-[-O-Z-O-C(O)-arylene-C(O)]ₘ- or
-C(O)-alkylene-C(O)-[-O-Z-O-C(O)-alkylene-C(O)]ₘ-,
wherein
Z comprises a mononuclear or polynuclear aromatic group of 6 to 30 carbon atoms, to which the oxygen atoms are directly linked,
the arylene group in each occurrence independently is optionally substituted at the aromatic ring with one or more radicals selected from the group consisting of halogen, hydroxy, oxyalkyl, alkoxy, -C(O)-[O-R⁴-P-(R)(R³)] or a monovalent hydrocarbon radical,
the alkylene group in each occurrence independently is optionally substituted with one or more radicals selected from the group consisting of halogen, hydroxy, oxyalkyl, alkoxy, -C(O)-[O-R⁴-P-(R)(R³)] or a monovalent hydrocarbon radical and
m is on average at least 0.5.

8. The product of Claim 7 wherein the alkylene group is a C₁₋₅₀-alkylene group which is optionally substituted with one or more alkyl or alkoxy groups and the arylene group is phenylene which is optionally substituted at the aromatic ring with one or more halogen, alkyl, cycloalkyl and/or alkoxy radicals.

9. A process for preparing a product which is end-capped with one or more groups 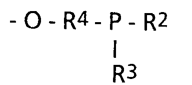 by reacting at least
(1) a carbonyl dihalide, diester or anhydride,
(2) a dihydric phenol and
(3) a phosphine of the general Formula II 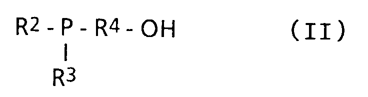 wherein
R, R³ and R⁴ have the meanings as indicated in Claim 1.

10. The process of Claim 9 wherein at least
(1) a carbonyl dihalide, diester or anhydride,
(2) a dihydric phenol,
(3) a phosphine of the general Formula II and
(4) a monohydric phenol comprising no phosphorous atom are reacted.

11. A polymer composition comprising one or more thermoplastic polymers and a reaction product of at least
(1) a carbonyl dihalide, diester or anhydride,
(2) a dihydric phenol and
(3) a phosphine of the general Formula II 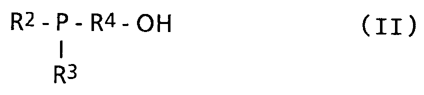 wherein
R, R³ and R⁴ have the meanings as indicated in Claim 1.

12. The polymer composition of Claim 11 wherein at least a portion of the thermoplastic polymer(s) is a polycarbonate.

13. A method of enhancing the thermal stability of a thermoplastic polymer which comprises contacting the thermoplastic polymer with the reaction product of any one of Claims 1 to 8.
